# FASCICULE DE BREVET EUROPEEN

(11) **EP 1 775 157 B1**
(45) Date de publication et mention de la délivrance du brevet: **23.07.2008**
(21) Numéro de dépôt: 06121952.3
(22) Date de dépôt: 09.10.2006
(51) Int. Cl.: B60P 1/36

(54) **Ensemble de convoyage pour camion à benne**
Fördereinheit für ein Kipperfahrzeug
Conveyor assembly for a tipping load vehicle

(30) Priorité: 12.10.2005 FR 0510395
(43) Date de publication de la demande: 18.04.2007
(73) Titulaire: Theam, 44340 Bouguenais (FR)
(72) Inventeur: Levesque, Henri-Bruno THEAM, 44000 Nantes (FR)
(74) Mandataire: Gaillarde, Frédéric F. Ch.

(56) Documents cités:
- DE-A1- 1 756 429
- DE-A1- 19 852 624
- DE-U- 1 949 560
- FR-A- 1 562 083
- FR-A- 2 332 884
- FR-A- 2 395 859
- FR-A- 2 671 315
- US-A- 2 879 910
- US-A- 3 768 784
- US-A- 5 193 971
- US-A- 5 498 119

## Description

La présente invention se rapporte à un ensemble de convoyage pour camion à benne.

La livraison sur un chantier des matériaux transportés par un camion à benne peut être effectuée par simple levage de la benne, et déversement des matériaux sur un des cotés ou par l'arrière du camion.

Cette façon de procéder n'est toutefois pas appropriée lorsqu'on ne souhaite livrer qu'une partie du chargement du camion à un endroit précis.

C'est la raison pour laquelle, dans l'état de la technique, on a conçu des convoyeurs montés sur des camions à benne.

On connaît du document US-A-2 879 910 un ensemble de convoyage pour camion à benne, adapté pour fermer l'arrière de la benne et qui remplace la plaque de fermeture habituelle de cette benne. Le convoyeur comprend un châssis comprenant au moins un premier élément rigide sur lequel circule une bande transporteuse continue. Le convoyeur est monté pivotant sur la plaque autour d'un axe horizontal. L'ensemble de convoyage comprend également des moyens solidaires de la plaque, adaptés pour faire passer le contenu de la benne vers le convoyeur.

On connaît du document FR-A-2 671 315 un dispositif de déchargement de matériaux contenus dans une benne basculante, le dispositif étant monté sur un support qui est articulé sur la benne.

On connaît également du document US-A-5 498 119 un dispositif de convoyage de matériaux qui est conçu pour se fixer sur la châssis d'un véhicule.

Le document FR 2 671 315 enseigne un exemple de réalisation d'un tel convoyeur, mobile autour d'axes horizontal et vertical.

Dans cet exemple de réalisation, le convoyeur est relié au châssis du camion à benne au moyen d'un système complexe de parallélogramme articulé.

La présente invention a notamment pour but de fournir des moyens de montage/démontage du convoyeur sur le camion à benne qui soient particulièrement simples à mettre en oeuvre.

On atteint ce but de l'invention avec un ensemble de convoyage pour camion à benne conforme à la revendication 1 ci-annexée.

Le fait de prévoir de monter le convoyeur sur la plaque de fermeture de la benne permet de monter/démonter de manière extrêmement simple ce convoyeur sur le camion à benne : il suffit en effet de substituer la plaque sur laquelle est monté ce convoyeur à la plaque de fermeture habituelle de la benne du camion.

Suivant d'autres caractéristiques optionnelles de l'ensemble de convoyeur selon l'invention :
- ledit châssis comprend en outre un deuxième élément rigide mobile autour d'un axe sensiblement horizontal par rapport audit premier élément rigide,
- ledit châssis comprend en outre un troisième élément rigide mobile autour d'un axe sensiblement horizontal par rapport audit deuxième élément rigide,
- au moins l'un desdits premier, deuxième et troisième éléments rigides est télescopique.

Le fait de prévoir plusieurs éléments rigides articulés entre eux, et le fait qu'au moins certains d'entre eux puissent être télescopiques, offrent une très grande maniabilité permettant de couvrir une large amplitude de livraison des matériaux transportés par le camion à benne.

Suivant encore une autre caractéristique optionnelle de l'ensemble de convoyeur selon l'invention, lesdits moyens de passage comprennent une gouttière formée dans ladite plaque, communiquant avec ladite benne et avec ledit convoyeur, et une vis sans fin disposée à l'intérieur de ladite gouttière (ou tout autre moyen de déplacement du matériau dans la gouttière, la vis sans fin n'étant qu'un exemple d'application).

Grâce à cette caractéristique, les moyens de transfert du chargement de la benne vers le convoyeur sont réalisés de manière simple, compacte et efficace.

Suivant encore une autre caractéristique optionnelle de l'ensemble de convoyeur selon l'invention, l'axe de rotation vertical dudit convoyeur est incliné par rapport au plan médian de ladite plaque, d'un angle sensiblement égal à l'angle de levage de ladite benne.

Grâce à cette caractéristique, lorsque la benne est levée, le convoyeur peut effectivement pivoter autour d'un axe sensiblement vertical, ce qui facilite sa manoeuvre.

Suivant encore une autre caractéristique optionnelle de l'ensemble de convoyeur selon l'invention, l'axe de rotation horizontal dudit convoyeur est placé dans la partie inférieure et à l'écart de ladite plaque.

Grâce à cette caractéristique, lorsque la benne est levée, il est possible d'orienter le convoyeur notamment vers l'avant du camion.

Suivant encore une autre caractéristique optionnelle de l'ensemble de convoyeur selon l'invention, lesdits moyens de mise en rotation dudit convoyeur autour d'un axe vertical comprennent un ensemble de palier mu par un moteur hydraulique + vis sans fin+couronne d'orientation + frein (ceci n'étant qu'un exemple de réalisation).

Grâce à cette caractéristique, on réalise de manière simple et fiable les moyens de pivotement du convoyeur autour d'un axe vertical.

La présente invention se rapporte également à un camion à benne équipé d'un ensemble de convoyage conforme à ce qui précède.

D'autres caractéristiques et avantages de la présente invention apparaîtront à la lumière de la description qui va suivre et à l'examen des planches de dessins ci-annexées, dans lesquelles :
- les figures 1 et 2 sont deux vues en perspective de l'ensemble de convoyage selon l'invention, avec des angles de vue différents ;
- les figures 3 et 4 sont deux vues de côté de l'ensemble de convoyage selon l'invention monté sur un camion à benne, dans des positions respectivement rétractée et allongée ;
- les figures 5 et 6 sont des vues en perspective d'un ensemble de convoyage selon l'invention équipant un camion à benne, positionné pour charger un deuxième camion situé respectivement à droite ou à gauche du premier ;
- la figure 7 est une vue de derrière d'un ensemble de convoyage selon l'invention comprenant deux éléments formant un angle l'un par rapport à l'autre ;
- la figure 8 est une vue de dessus d'un ensemble de convoyage équipant un camion à benne, sur laquelle on a représenté le débattement angulaire du convoyeur, et
- les figures 9 et 10 sont des vues respectivement en perspective et de côté d'un ensemble de convoyage selon l'invention en position pliée équipant un camion à benne.

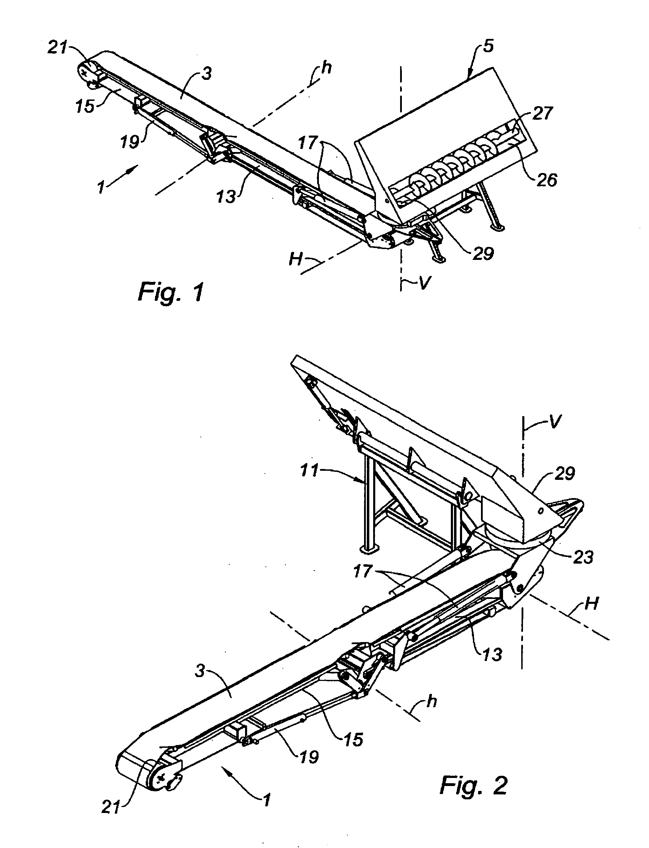

On se rapporte à présent aux figures 1 à 4, sur lesquelles on peut voir que l'ensemble de convoyage selon l'invention comprend un châssis 1 sur lequel circule une bande transporteuse continue 3, ce châssis étant monté pivotant autour d'un axe vertical V et autour d'un axe horizontal H sur une plaque 5 adaptée pour fermer l'arrière de la benne 7 d'un camion à benne 9.

Sur les figures 1 et 2, l'ensemble de convoyage selon l'invention est désolidarisé de la benne 7 et posé sur un trépied de support 11.

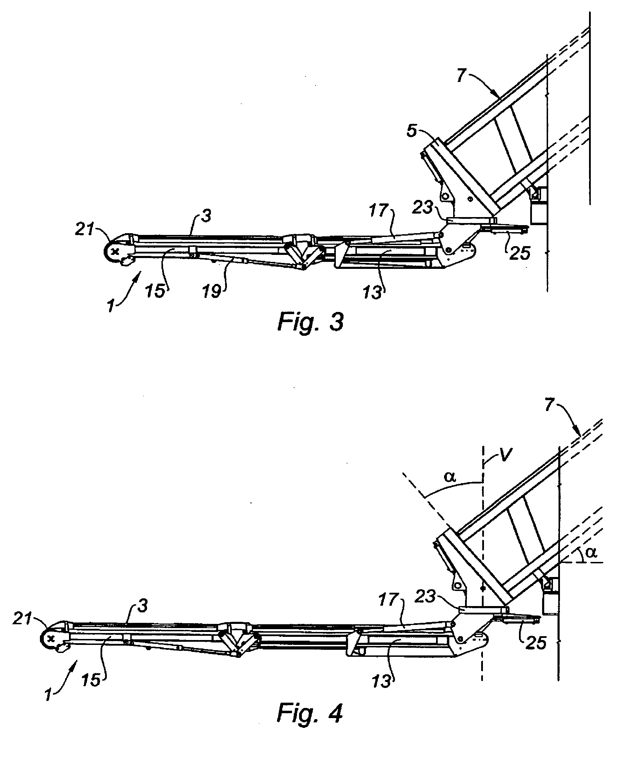

Sur les figures 3, 4 et suivantes au contraire, la plaque 5 est montée sur la benne 7 du camion 9, et remplace la plaque de fermeture habituelle de cette benne.

Comme on peut le voir sur les figures 1 à 4, le convoyeur 1 comprend en fait deux éléments rigides 13 et 15 articulés l'un par rapport à l'autre autour d'un deuxième axe sensiblement horizontal h.

Les mouvements autour des axes horizontaux H et h des premier 13 et deuxième 15 éléments rigides sont commandés par des vérins hydrauliques respectifs 17 et 19.

L'entraînement de la bande transporteuse 3 par rapport au châssis 1 est effectué par un tambour 21 situé à l'extrémité libre du châssis 1 et entraîné par un moteur hydraulique (non représenté).

Le châssis 1 est monté sur la plaque 5 par l'intermédiaire d'une couronne d'orientation 23, et la mise en rotation du châssis 1 autour de l'axe sensiblement vertical V est effectuée au moyen d'un ensemble moteur hydraulique + vis sans fin + couronne 23 + frein.

Sur la face intérieure de la plaque 5, c'est-à-dire sur la face de cette plaque qui est destinée à se trouver à l'intérieur de la benne 7, se trouve une gouttière sensiblement horizontale 26 à l'intérieur de laquelle est disposée une vis sans fin 27.

Cette vis sans fin peut être actionnée en rotation par un moteur hydraulique connu en soi et non représenté.

La gouttière 26 communique avec la bande transporteuse 3 par l'intermédiaire d'un passage 29.

Comme cela est visible sur les figures 3 et 4, la longueur du convoyeur peut être réglée grâce à un mouvement télescopique du premier élément rigide 13.

Ce mouvement télescopique provoqué par un vérin hydraulique non représenté, est permis grâce à un parcours en « S » de la bande transporteuse 3 sur le premier élément rigide 13, comme cela est visible en particulier sur la figure 2.

Bien entendu, le châssis 1 pourrait comprendre plus de deux éléments rigides articulés l'un par rapport à l'autre, et l'un quelconque ou plusieurs de ces éléments pourrai(en)t être télescopique(s).

Comme cela est visible sur les figures 3 et 4, la couronne d'orientation 23 est fixée sur la plaque 5 de manière que l'axe de rotation V de ce palier forme un angle α par rapport au plan médian de la plaque 5, cet angle α étant sensiblement égal à l'angle que forme la benne 7 du camion 9 en position de levage.

Typiquement, cet angle peut être de l'ordre de 35°.

On notera également, comme cela est visible aussi sur les figures 3 et 4, que l'axe de rotation horizontal H du premier élément rigide 13 est positionné dans la partie inférieure et à distance du plan médian de la plaque 5, de manière que lorsque la benne est inclinée en position de déchargement, cet axe H se trouve sous le niveau de cette benne.

Le mode de fonctionnement et les avantages de l'ensemble de convoyage selon l'invention résultent directement de la description qui précède.

Comme indiqué précédemment, pour monter l'ensemble de convoyage selon l'invention sur la benne 7 d'un camion à benne 9, il faut commencer par enlever la plaque de fermeture arrière de cette benne, et lui substituer la plaque 5.

Lorsqu'on souhaite livrer les matériaux transportés par la benne 7 à un endroit donné, on commence par placer le camion 9 à proximité de cet endroit, puis on lève la benne de manière à ce qu'elle atteigne son angle de déchargement α (voir figure 4 notamment) et on agit ensuite sur le convoyeur de manière que son extrémité libre soit située au-dessus du point de livraison souhaité.

Pour atteindre cette position, on agit sur le moteur hydraulique de la couronne de mise en rotation du convoyeur autour de l'axe sensiblement vertical V, sur les vérins 17 et 19 de variation d'inclinaison des premier 13 et deuxième 15 éléments rigides, et, si nécessaire, sur le vérin de modification de la longueur du premier élément rigide 13.

Du fait de l'inclinaison de l'axe de rotation de la couronne 23 par rapport au plan médian de la plaque 5, on peut faire pivoter le convoyeur autour d'un axe sensiblement vertical lorsque la benne est en position levée.

Dans l'exemple représenté aux figures 3 et 4, le convoyeur s'étend de manière sensiblement horizontale et permet la livraison des matériaux de la benne à un point situé plus ou moins vers l'arrière de cette benne.

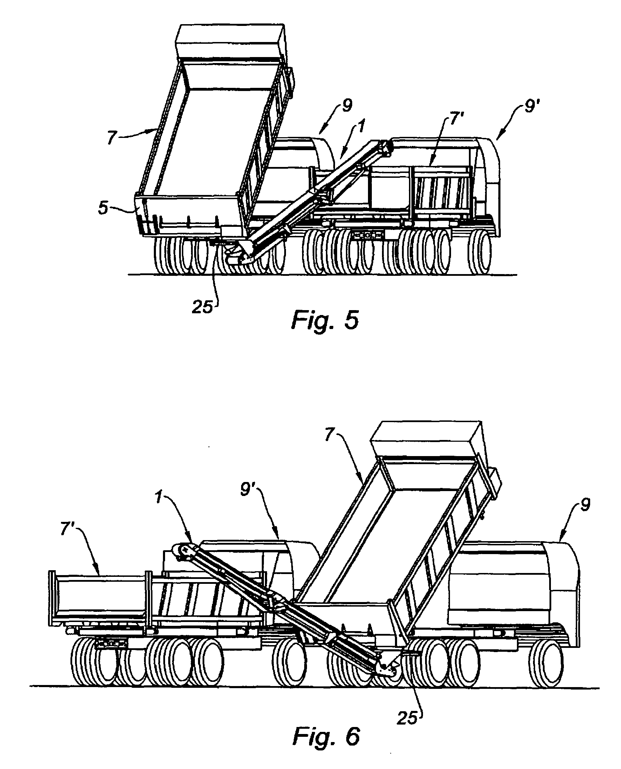

Dans la configuration représentée à la figure 5, le convoyeur s'étend vers l'avant, vers la droite et vers le haut du camion à benne 9, et permet ainsi par exemple le chargement de la benne 7' d'un deuxième camion à benne 9' situé à droite du camion à benne 9.

Dans la configuration représentée à la figure 6, le convoyeur s'étend vers l'arrière, vers la gauche et vers le haut du camion à benne 9, et permet le chargement de la benne 7' d'un deuxième camion à benne 9' disposé à gauche du camion à benne 9.

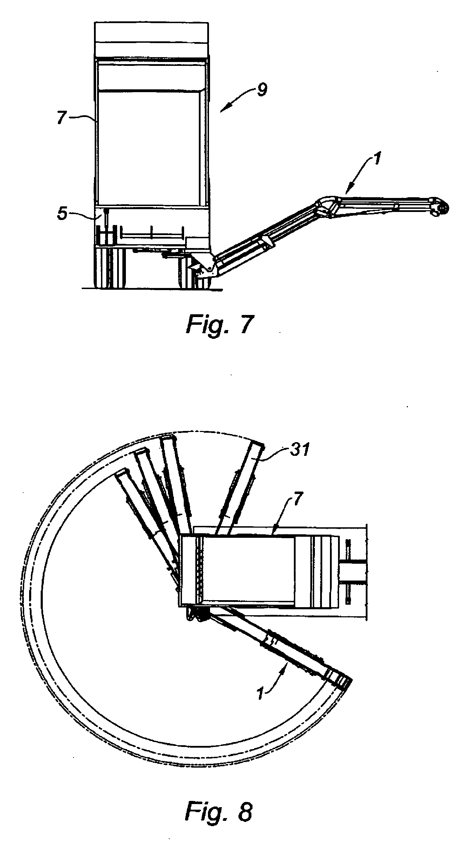

Dans la configuration représentée à la figure 7, le convoyeur s'étend vers la droite du camion à benne 9, et tandis que le premier élément rigide 13 est incliné vers le haut, le deuxième élément rigide 15 est disposé de manière sensiblement horizontale, permettant ainsi de livrer les matériaux de la benne 7 à un point situé en hauteur.

Sur la figure 8, on a représenté l'ensemble des positions angulaires que peut occuper le convoyeur lorsque la benne 7 du camion benne 9 est levée.

Comme on peut le voir sur cette figure, on obtient un débattement angulaire qui atteint quasiment 270°.

Un tel débattement peut être atteint notamment en raison du fait que l'axe horizontal H de rotation du convoyeur se trouve sous le niveau de la benne 7 lorsque celle-ci est en position basculée, ce qui permet à ce convoyeur de passer sous cette benne, comme c'est le cas pour la position 31 de la figure 8.

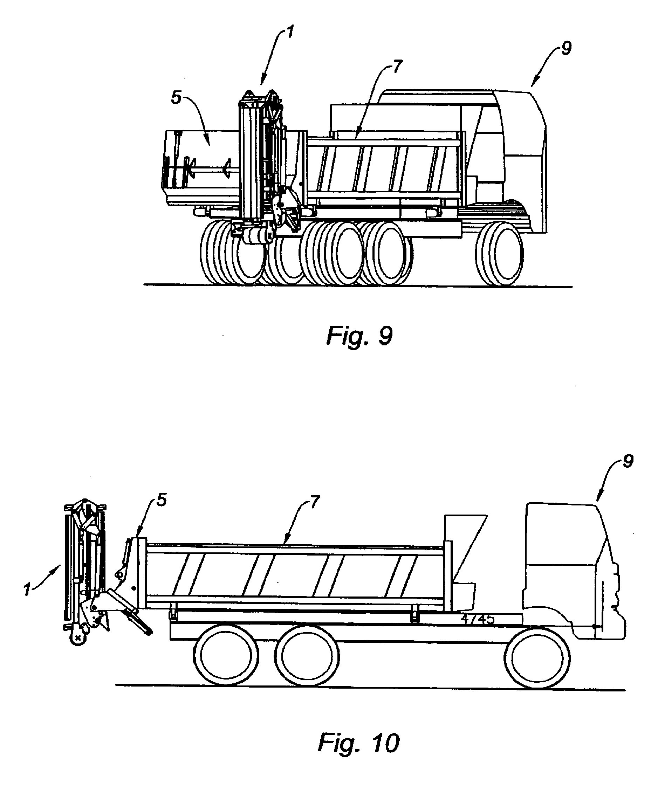

Une fois que l'on a terminé l'opération de livraison, on peut replier le convoyeur conformément aux figures 9 et 10, c'est-à-dire de manière que les premier 13 et deuxième 15 éléments rigides soit repliés l'un contre l'autre et s'étendent de manière sensiblement verticale (ou inclinée en ne dépassant pas du gabarit latéral du camion 9).

Dans cette position, le convoyeur occupe un minimum de place et peut être transporté sur la route sans qu'il soit nécessaire de le démonter du camion à benne.

Comme on peut le comprendre à présent, l'ensemble de convoyage selon l'invention est particulièrement ergonomique, la double articulation du convoyeur autour d'axes horizontal et vertical permettant de livrer le chargement de la benne du camion pratiquement à n'importe quel point situé au voisinage de cette benne.

Ceci permet en particulier d'éviter d'avoir à positionner le camion d'une manière précise préalablement à l'opération de déchargement au moyen du convoyeur.

On notera que le caractère amovible de l'ensemble de convoyeur selon l'invention le rend particulièrement commode et adaptable sur des bennes existantes.

Les convoyeurs peuvent servir à livrer des matériaux divers tels que du sable (0-5mm), du gravier (5mm-40mm) ou de l'asphalte.

Bien entendu, la présente invention n'est nullement limitée à l'exemple décrit et représenté, fourni à titre purement illustratif.

C'est ainsi notamment que le convoyeur pourrait être fixé sur la partie gauche de la plaque 5, au lieu d'être fixé sur la partie droite de cette plaque (ou à tout autre endroit de ladite plaque), comme cela a été représenté sur l'ensemble des figures ci-annexées.

C'est ainsi également que l'on pourrait prévoir un système de rattrapage d'angle du type parallélogramme articulé, permettant de maintenir l'axe de rotation V du convoyeur 1 par rapport à la plaque 5 en position sensiblement verticale quelle que soit l'inclinaison de la benne 7.

## Revendications

1. Ensemble de convoyage pour camion à benne, comprenant :
- une plaque (5) adaptée pour fermer l'arrière de ladite benne, en remplacement de la plaque de fermeture habituelle de cette benne,
- un convoyeur comprenant un châssis (1) comprenant au moins un premier élément rigide (13) sur lequel circule une bande transporteuse continue (3), ce convoyeur étant monté pivotant sur ladite plaque (5) autour d'un axe sensiblement horizontal (H), et
- des moyens (5, 26, 27, 29) solidaires de ladite plaque (5), adaptés pour faire passer le contenu de ladite benne (7) vers ledit convoyeur,
**caractérisé en ce que** le convoyeur est monté pivotant autour d'un axe de rotation sensiblement vertical (V) qui est incliné par rapport au plan médian de ladite plaque (5), d'un angle (α) sensiblement égal à l'angle de déchargement de ladite benne (7).

2. Ensemble de convoyeur selon la revendication 1, dans lequel ledit châssis (1) comprend en outre un deuxième élément rigide (15) mobile autour d'un axe sensiblement horizontal (H) par rapport audit premier élément rigide (13).

3. Ensemble de convoyeur selon l'une des revendications 1 ou 2, dans lequel ledit châssis comprend en outre un troisième élément rigide mobile autour d'un axe sensiblement horizontal par rapport audit deuxième élément rigide.

4. Ensemble de convoyeur selon l'une quelconque des revendications 1 à 3, dans lequel au moins l'un desdits premier (13), deuxième (15) et troisième éléments rigides est télescopique.

5. Ensemble de convoyeur selon l'une quelconque des revendications précédentes, dans lequel lesdits moyens de passage comprennent une gouttière (26) formée dans ladite plaque (5), communiquant avec ladite benne (7) et avec ledit convoyeur, et une vis sans fin (27) disposée à l'intérieur de ladite gouttière (26).

6. Ensemble de convoyeur selon l'une quelconque des revendications précédentes, dans lequel l'axe de rotation horizontal (H) dudit convoyeur est placé dans la partie inférieure et à l'écart de ladite plaque (5).

7. Ensemble de convoyeur selon l'une quelconque des revendications précédentes, dans lequel lesdits moyens de mise en rotation dudit convoyeur autour d'un axe vertical (V) comprennent une couronne (23) mue par un moteur hydraulique.

8. Camion à benne (9) équipé d'un ensemble de convoyage conforme à l'une quelconque des revendications précédentes.

## Claims

1. Conveyor assembly for a lorry with a bulk body, comprising:
- a plate (5) suitable for closing the rear of the said bulk body, as a replacement for the usual closure plate for this bulk body,
- a conveyor comprising a chassis (1) comprising at least a first rigid element (13) on which a continuous conveyor belt (3) travels, this conveyor being mounted so as to pivot on the said plate (5) about a substantially horizontal axis (H), and
- means (5, 26, 27, 29) fixedly attached to the said plate (5), suitable for having the content of the said bulk body (7) pass towards the said conveyor,
**characterized in that** the conveyor is mounted so as to pivot about a substantially vertical axis of rotation (V) that is inclined relative to the mid-plane of the said plate (5), at an angle (α) substantially equal to the unloading angle of the said bulk body (7).

2. Conveyor assembly according to Claim 1, in which the said chassis (1) also comprises a second rigid element (15) that can move about a substantially horizontal axis (H) relative to the said first rigid element (13).

3. Conveyor assembly according to one of Claims 1 or 2, in which the said chassis also comprises a third rigid element that can move about a substantially horizontal axis relative to the said second rigid element.

4. Conveyor assembly according to any one of Claims 1 to 3, in which at least one of the said first rigid element (13), second rigid element (15) and third rigid element is telescopic.

5. Conveyor assembly according to any one of the preceding claims, in which the said means of passage comprise a trough (26) formed in the said plate (5) communicating with the said bulk body (7) and with the said conveyor, and an auger (27) placed inside the said trough (26).

6. Conveyor assembly according to any one of the preceding claims, in which the horizontal axis of rotation (H) of the said conveyor is placed in the lower portion and at a distance from the said plate (5).

7. Conveyor assembly according to any one of the preceding claims, in which the said means for rotating the said conveyor about a vertical axis (V) comprise a crown wheel (26) moved by a hydraulic motor.

8. Lorry with a bulk body (9) fitted with a conveyor assembly according to any one of the preceding claims.

## Patentansprüche

1. Fördereinheit für Kipperfahrzeug, die Folgendes aufweist:
- eine Platte (5), die die Rückseite des Kippers verschließen kann, als Ersatz für die übliche Verschlussplatte dieses Kippers,
- einen Förderer mit einem Chassis (1), das mindestens ein erstes starres Element (13) aufweist, auf dem ein kontinuierliches Förderband (3) zirkuliert, wobei dieser Förderer auf die Platte (5) um eine im Wesentlichen horizontale Achse (H) schwenkend montiert ist, und
- Mittel (5, 26, 27, 29), die fest mit der Platte (5) verbunden sind, die den Inhalt des Kippers (7) zu dem Förderer übergehen lassen können,
**dadurch gekennzeichnet, dass** der Förderer um eine im Wesentlichen vertikale Rotationsachse (V), die zu der Mittenebene der Platte (5) um einen Winkel (α) im Wesentlichen gleich dem Entladewinkel des Kippers (7) geneigt ist, schwenkend montiert ist.

2. Fördereinheit nach Anspruch 1, bei der das Chassis
(1) ferner ein zweites starres Element (15) aufweist, das um eine im Wesentlichen horizontale Achse (H) in Bezug auf das erste starre Element (13) beweglich ist.

3. Fördereinheit nach einem der Ansprüche 1 oder 2, bei der das Chassis ferner ein drittes starres Element aufweist, das um eine im Wesentlichen horizontale Achse in Bezug auf das zweite starre Element beweglich ist.

4. Fördereinheit nach einem der Ansprüche 1 bis 3, bei der mindestens eines der Elemente der ersten (13), zweiten (15) und dritten starren Elemente teleskopisch ist.

5. Fördereinheit nach einem der vorhergehenden Ansprüche, bei der die Übergangsmittel eine Rinne (26) aufweisen, die in der Platte (5) ausgebildet ist, die mit dem Kipper (7) und dem Förderer kommuniziert, und eine Schnecke (27), die im Inneren der Rinne (26) angeordnet ist.

6. Fördereinheit nach einem der vorhergehenden Ansprüche, bei der die horizontale Rotationsachse (H) des Förderers in dem unteren Teil und abseits von der Platte (5) platziert ist.

7. Fördereinheit nach einem der vorhergehenden Ansprüche, bei der die Mittel zum Indrehungversetzen des Förderers um eine vertikale Achse (V) einen Kranz (23) aufweisen, der von einem Hydromotor bewegt wird.

8. Kipperfahrzeug (9), ausgestattet mit einer Fördereinheit nach einem der vorhergehenden Ansprüche.
